# EUROPEAN PATENT APPLICATION

(11) **EP 1 736 890 A2**
(43) Date of publication of application: **27.12.2006**
(21) Application number: 06011545.8
(22) Date of filing: 02.06.2006
(51) Int. Cl.: G06F 13/28, G06F 9/46

(54) **Stream processor including DMA controller used in data processing apparatus**

(30) Priority: 03.06.2005 JP 2005164579
(71) Applicant: NEC Electronics Corporation, Kawasaki, Kanagawa 211-8668 (JP)
(72) Inventor: Togawa, Katsumi, Kawasaki Kanagawa 211-8668 (JP); Anjo, Kenichiro, Kawasaki Kanagawa 211-8668 (JP); Fujii, Taro, Kawasaki Kanagawa 211-8668 (JP)
(74) Representative: Glawe, Delfs, Moll

(57) **Abstract**

In a stream processor, an input direct memory access circuit is adapted to receive a task command (TCMD) and task data (TDA) in correspondence with a task from an external memory (3). A processor unit (52) is adapted to receive the task command and the task data from the input direct memory access circuit and perform the task upon the task data in accordance with a task program designated by the task command. A direct memory access controller (57) is adapted to load the task program from the external memory into the processor unit upon receipt of a task program load request from the processor unit.

## Description

### BACKGROUND OF THE INVENTION

### Field of the Invention

The present invention relates to a data processing apparatus capable of realizing various kinds of processings, and more particularly, to a stream processor thereof.

### Description of the Related Art

A data processing apparatus has been required to have a higher capability of processing a large amount of data such as moving video data at a higher speed, so that such a data processing apparatus has not only a host processor such as a central processing unit (CPU) but also digital signal processors (DSPs) or application specific integrated circuit (ASIC) units for decreasing the processing load of the host processor.

On the other hand, in a data processing apparatus, various kinds of data encoding/decoding processings are required for processing multi-media data such as stationary video data, moving video data, audio data and music data. Also, various kinds of communication protocols are used for transmitting/receiving data via networks such as the Internet. Further, encipherment/decipherment processings are required for maintaining data security protection.

Thus, in order to completely decrease the processing load of the host processor, a large number of DSPs or ASIC units are required, which would increase the data processing apparatus in size and in manufacturing cost.

Instead of providing a large number of DSPs and ASIC units, a prior art data processing apparatus is constructed by a programmable logic device (PLD) whose task program is changed by a changing section as occasion demands (see:
JP-11-184718-A). This will be explained later in detail.

In the above-described prior art data processing apparatus, since a task program of a task carried out by the programmable logic device is changed by the changing section, various tasks can be carried out, which would decrease the size and the manufacturing cost.

### SUMMARY OF THE INVENTION

In the above-described prior art data processing apparatus, however, a task program of a task carried out by the programmable logic device is not actively changed by the changing section, but the host processor actually determines a task program to be carried out by the programmable logic device. As a result, the processing load of the host processor is still large. Also, the storing and loading operation of intermediate data increases latency of a memory, which would decrease the throughput of the host processor.

Note that a task switching operation of the host processor (CPU) is also disclosed in JP-2004-220070-A.

Also, a data-array type processor whose task programs can be also changed is known to correspond to the programmable logic device of the above-described prior art data processing apparatus (see: JP-2001-312481-A, JP-2003-196246-A, and Hideharu Amano, Akiya Jouraku and Kenichiro Anjo, "A dynamically adaptive switch fabric on a multicontext reconfigurable device", Proceeding of International Field Programmable Logic and Application Conference, pp.161-170, September 2003).

For example, an array-type data processing apparatus is constructed by a host processor (CPU), a stream processor formed by an array-type processor unit formed by plurality of processor elements arranged in an array and an input/output control circuit for controlling input/output operations of the array-type processor unit, and a memory for storing task programs and intermediate data for the stream processor. Due to the presence of the array-type processor unit, a plurality of processings can be carried out in parallel.

Even in this array-type data processing apparatus, in the same way as in the above-described prior art data processing apparatus, since the replacement of a task program and intermediate data for the stream processor is performed by the host processor (CPU), the processing load of the host processor (CPU) is still large, so that the processing capability and throughput of the data processing apparatus would be decreased.

According to the present invention, in a stream processor, an input direct memory access (DMA) circuit is adapted to receive a task command and task data in correspondence with a task from an external memory. A processor unit is adapted to receive the task command and the task data from the input direct memory access circuit and perform the task upon the task data in accordance with a task program designated by the task command. A direct memory access controller is adapted to load the task program from the external memory into the processor unit upon receipt of a task program load request from the processor unit.

### BRIEF DESCRIPTION OF THE DRAWINGS

The present invention will be more clearly understood from the description set forth below, as compared with the prior art, with reference to the accompanying drawings, wherein:
Fig. 1 is a block diagram illustrating a prior art data processing apparatus;
Fig. 2 is a timing diagram for explaining the multi-tasking operation of the data processing apparatus of Fig. 1;
Fig. 3 is a block diagram illustrating an embodiment of the data processing apparatus including a stream processor according to the present invention;
Figs. 4A and 4B are formats of descriptors used in the data processing apparatus of Fig. 3;
Fig. 4C is an example of the content of the descriptor supervising table of Fig. 3;
Fig. 5 is a table showing an example of the content of the direct memory access (DMA) command table of Fig. 3;
Fig. 6 is a flowchart for explaining the operation of the DMA control unit of Fig. 3;
Fig. 7 is a flowchart for explaining the operation of the array-type processor unit of Fig. 3; and
Fig. 8 is a timing diagram for explaining the multi-tasking operation of the data processing apparatus of Fig. 3.

### DESCRIPTION OF THE PREFERRED EMBODIMENT

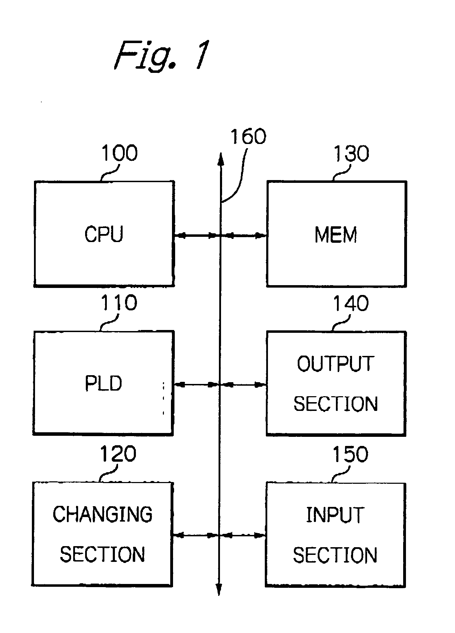

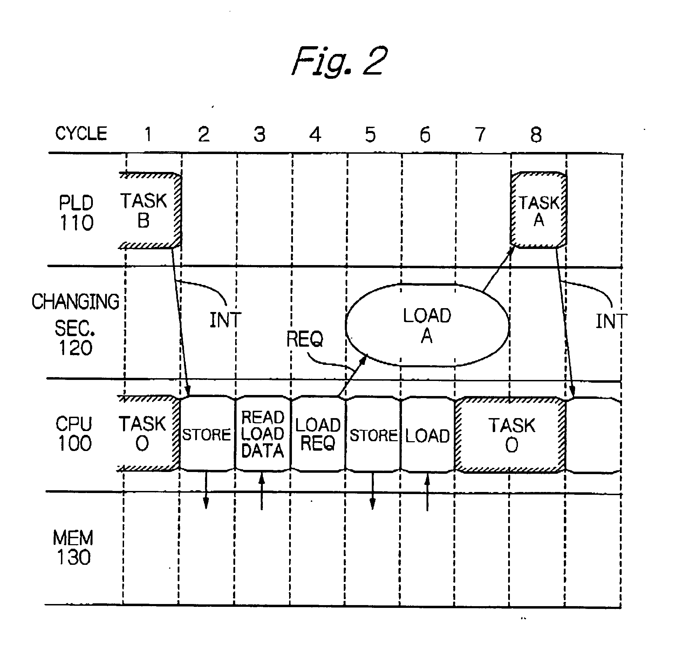

Before the description of the preferred embodiment, a prior art data processing apparatus will be explained with reference to Figs. 1 and 2.

In Fig. 1, which illustrates a prior art data processing apparatus (see: JP-11-184718-A), this data processing apparatus is constructed by a central processing unit (CPU) 100 as a host processor for carrying out a processing in accordance with the operating systems (OSs), application programs and the like, a programmable logic device (PLD) 110 for carrying out a specific processing (which is called a task) in accordance with a specific program (which is called a task program) instead of the CPU 100, a changing section 120 for changing the task program of the programmable logic device 110, a memory 130 for storing the operating systems (OSs), the application programs, the task programs and various data such as task data and intermediate data, an output section 140, and an input section 150. The CPU 100, the programmable logic device 110, the changing section 120, the memory 130, the output section 140, and the input section 150 are connected by a bus 160 to each other.

Since the programmable logic device 110 cannot load a task program into the memory of the programmable logic device 110 per se, such a task program is loaded into the memory of the programmable logic device 110 by the CPU 100 and the changing section 120.

That is, every time the CPU 100 needs to make the programmable logic device 110 carry out a task, the CPU 100 transmits a load request for loading a task program of the task and information specifying the task program to the changing section 120. Also, the CPU 100 transmits task data to be carried out to the programmable logic device 110.

On the other hand, when the changing section 120 has received the above-mentioned load request from the CPU 100, the changing section 120 reads a task program designated by the CPU 100 from the memory 130 and loads it into the memory of the programmable logic device 110. As a result, the programmable logic device 110 changes its internal circuit to perform a task using the received task program. After the task is completed, the programmable logic device 110 generates an interrupt signal INT and transmits it to the CPU 100. Then, the CPU 100 again determines the next task to be carried out by the programmable logic device 110. As a result, when the next task is the same as the one carried out immediately before by the programmable logic device 110, the CPU 100 transmits the next task data to the programmable logic device 110. Contrary to this, when the next task is different from the one carried out immediately before by the programmable logic device 110, the CPU 100 transmits a load request for loading another task program and information specifying the next task program, thus renewing the task program stored in the memory of the changing section 120.

Thus, in the data processing apparatus of Fig. 1, since a task program of a task carried out by the programmable logic device 110 is changed by the changing section 120, various task programs can be carried out, which would decrease the size and manufacturing cost of the apparatus of Fig. 1.

In the data processing apparatus of Fig. 1, however, a task program of a task carried out by the programmable logic device 110 is not actively changed by the changing section 120, but the CPU 100 actually determines a task program of a task to be carried out by the programmable logic device 110 upon receipt of an interrupt signal INT therefrom, so that the CPU 100 generates a loading request REQ. Therefore, the larger the number of interrupt signals INT generated from the programmable logic device 110, the larger the processing load of the CPU 100.

In Fig. 1, a multi-tasking operation is carried out by the CPU 100. In this case, when the CPU 100 has received an interrupt signal INT for showing completion of one task, the CPU 100 initiates an interrupt handler to determine the next task to be carried out by the programmable logic device 110, so as to generate a load request for loading a task program. The initiation of the interrupt handler would generate an overhead by the task switching operation of the CPU 100 to decrease the throughput of the CPU 100.

The multi-tasking operation of the data processing system of Fig. 1 is explained next with reference to Fig. 2. Note that the task switching operation of the CPU 100 is also disclosed in JP-2004-220070-A.

In Fig. 2, assume that, while the CPU 100 carries out a task 0, the CPU 100 receives a interrupt signal INT for showing completion of a task B from the programmable logic device 110, so that the CPU 100 transmits a load request for loading a task program of a task A. After that, the CPU 100 recarries out the task 0.

First, at cycle 1, when the programmable logic device 110 completes the task B using its task program while the CPU 100 carries out the task 0, the programmable logic device 110 generates an interrupt signal INT and transmits it to the CPU 100 to request loading of the task program of the task A.

Next, at cycle 2, the CPU 100 stops the task 0 and stores and reserves intermediate data of the task 0, i.e., the value of internal registers thereof such as a general-purpose register, a status register, a program counter and a stack pointer in the memory 130.

Next, at cycle 3, the CPU 100 reads initial data of the next task A to be carried out by the programmable logic device 110 from the memory 130 and writes it into the internal registers of the CPU 100. Note that the initial data indicates the kind of the task program.

Next, at cycle 4, the CPU 100 transmits a load request REQ for loading the task program of a task A and the information specifying this task program to the changing section 120. Also, the CPU 100 transmits the task data to the programmable logic device 110. As a result, at cycles 5, 6 and 7, the task program A and the task data a1 are loaded from the memory 130 into the programmable logic device 110. Thus, at cycle 8, the programmable logic device 110 performs the task A upon the task data using the task program of the task A.

On the other hand, at cycle 5, the CPU 100 stores the kind of the task program of a task A in the memory 130. Then, at cycle 6, the stored intermediate data of the task 0 is loaded from the memory 130 to the internal registers of the CPU 100, so that, at cycles 7 and 8, the CPU 100 carries out the task 0 again.

Also, at cycle 8, when the programmable logic device 110 completes the task A upon the task data using the task program a1 while the CPU 100 carries out the task 0, the programmable logic device 110 generates an interrupt signal INT and transmits it to the CPU 100 to request loading of the next task program and the next task data.

Thus, the larger the number of interrupt signals INT from the programmable logic device 110, the larger the overhead of the CPU 100 caused by the storing operation of intermediate data to the memory 130 and the loading operation of the stored intermediate data to the CPU 100, i.e., the increase of latency of the memory 130. This would decrease the throughput of the CPU 100.

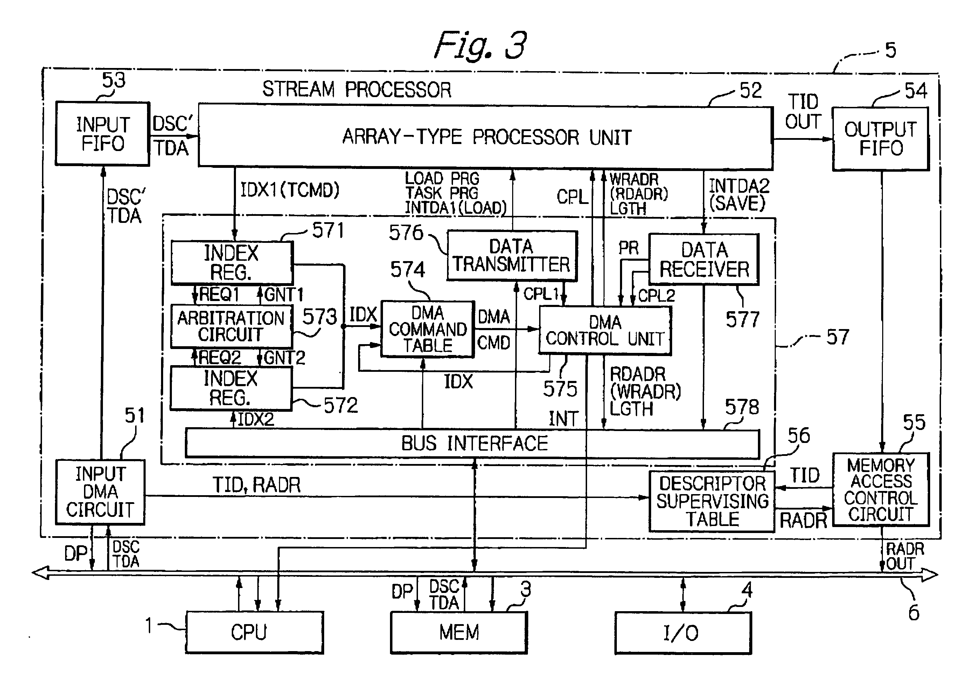

In Fig. 3, which illustrates an embodiment of the data processing apparatus including a stream processor 5 according to the present invention, the stream processor 5 corresponding to the programmable logic device 110 and the changing section 120 of Fig. 1 is provided. Also, a CPU 1 and a memory 3 corresponding to the CPU 100 and the memory 130, respectively, of Fig. 1 are provided. Further, an input/output unit 4 corresponding to the output section 140 and the input section 150 of Fig. 1 and a bus interface 6 corresponding to the bus 160 of Fig. 1 are provided. In this case, the memory 3 stores OSs, application programs including a main program for the CPU 1, task programs for the stream processor 5, task data for the stream processor 5, descriptors DSC for processing the task data, output data OUT of the stream processor 5, and intermediate data of the internal registers of the stream processor 5 which is saved therefrom.

Note that the CPU 1 of Fig. 3 can be another processing unit such as a DSP or an ASIC unit which can control the entire data processing apparatus of Fig. 3.

The stream processor 5 is constructed by an input direct memory access (DMA) circuit 51 for reading the descriptors DSC and the task data TDA from the memory 3, an array-type processor unit 52 formed by a plurality of processor elements arranged in an array for performing a task, an input first-in first-out buffer (FIFO) 53 for receiving the task data TDA associated with a short descriptor DSC' of a transaction identifier TID, a task command TCMD and a data size of the task data TDA of one descriptor DSC from the input DMA circuit 51 and supplying it to the array-type processor unit 52, an output FIFO 54 for receiving the output data OUT associated with the transaction identifier TID from the array-type processor unit 52, a memory access control circuit 55, a descriptor supervising table 56 for receiving the transaction identifier TID and a return (output data) address RADR of one descriptor DSC from the input DMA circuit 51 to control the memory access control circuit 55, and a DMA controller 57 for controlling the array-type processor unit 52.

Each of the input DMA circuit 51, the DMA controller 52, the memory access control circuit 55, and the descriptor supervising table 56 can be formed by using a logic circuit and a memory, or a CPU (or DSP). Also, a plurality of array-type processor units can be provided instead of the single array-type processor unit 52; in this case, each of the array-type processor units is associated with one input FIFO similar to the input FIFO 53 and one output FIFO similar to the output FIFO 54.

The DMA controller 57 will be explained later in detail.

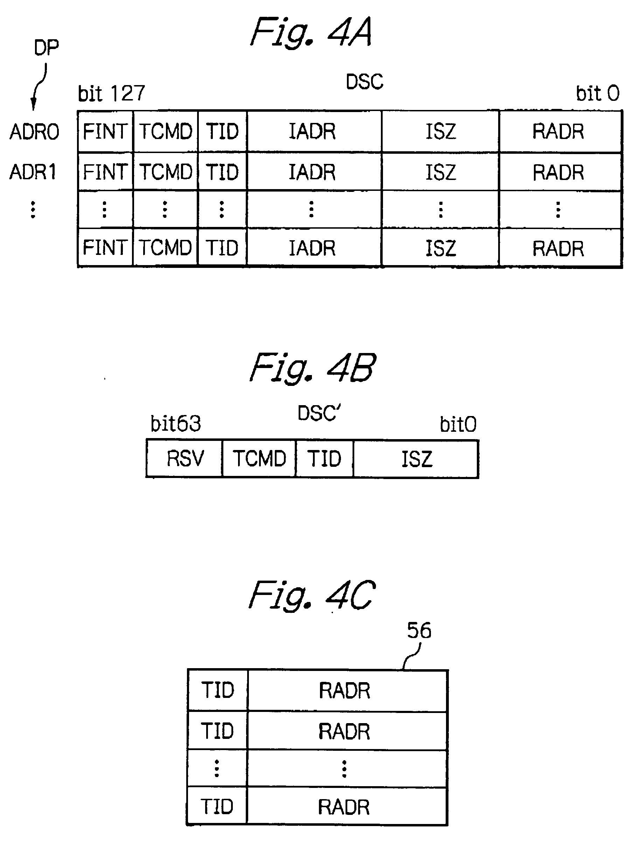

The format of the descriptors DSC stored in the memory 3 is shown in Fig. 4A. Also, Fig. 4A shows a state where a plurality of descriptors are stored in the memory 3. That is, the first descriptor is stored in an area of the memory 3 whose memory address is ADR0, the second descriptor is stored in an area of the memory 3 whose memory address is ADR1, ···. A descriptor pointer DP of a descriptor indicates a memory address of an area of the memory 3 in which this descriptor is stored. That is, each descriptor DSC is formed by 128 bits which are divided into fields defined by an interrupt flag FINT, a task command TCMD, a transaction identifier TID, an input data address IADR, an input data (task data) size ISZ, and a return (output data) address RADR.

The interrupt flag FINT is a bit used for informing a completion of processing by the stream processor 5 to the CPU 1.

The task command TCMD is an indicator for indicating a task carried out by the stream processor 5.

The transaction identifier TID is an identifier for identifying descriptors (DSC) from each other, i.e., input data (task data) processed by the array-type processor unit 52.

The input data address IADR is a pointer for pointing to a start address of the memory 3 in which the task data is stored.

The input data (task data) size ISZ is size data of the input data (task data).

The return (output data) address RADR is a pointer for pointing to a start address of the memory 3 in which output data of the array-type processor unit 52 is stored.

The descriptor DSC as shown in Fig. 4A is read by the CPU 1 from the memory 3 to the input DMA circuit 51 which transmits a 64-bit short descriptor DSC' as shown in Fig. 4B, which is a part of the 128-bit descriptor DSC, to the input FIFO 53. In the short descriptor DSC', RSV designates a reserve region.

Note that the bit width of the descriptor DSC and the short descriptor DSC' as shown in Figs. 4A and 4B can be set in accordance with the processing bit width of the CPU 1 and the array-type processor unit 23, respectively.

The descriptors DSC in the memory 3 are prepared in advance by a descriptor preparing program stored in the memory 3 carried out by the CPU 1. When tasks are carried out by the stream processor 5, descriptors DSC are input by the input DMA circuit 51. Then, task programs are loaded into the array-type processor unit 52 via the DMA controller 57 in accordance with the input descriptors DSC, while task data are loaded into the array-type processor unit 52 via the input DMA circuit 51 and the input FIFO 53. Finally, output data OUT is supplied from the array-type processor unit 52 via the output FIFO 54 and the memory access control circuit 53 to the memory 3.

The input DMA circuit 51 has a descriptor pointer DP for pointing to an address of the memory 3 associated with the descriptors DSC as shown in Fig. 4A. When tasks are carried out by the stream processor 5, an initial value is set in the descriptor pointer DP by the CPU 1.

The input DMA circuit 51 reads one descriptor DSC from the memory 3 in accordance with the value of the descriptor pointer DP to extract the task command TCMD, the transaction identifier TID and the task data size ISZ as the short descriptor DSC' as shown in Fig. 4B and transmit them to the input FIFO 53. Simultaneously, task data having an input data size ISZ indicated by the input data address IADR is read by the input DMA circuit 51 from the memory 3 to the input FIFO 53. Thus, since the input DMA circuit 51 transmits the 64-bit short descriptor DSC' as shown in Fig. 4B, not the 128-bit descriptor DSC as shown in Fig. 4A, the transfer of data from the input DMA circuit 51 to the input FIFO 53 is decreased to enhance the throughput of the data transfer.

On the other hand, the input DMA circuit 51 extracts the transaction identifier TID and the return address RADR from the read descriptor DSC and transmits them to the descriptor supervising table 56 whose content is shown in Fig. 4C.

The input FIFO 53 sequentially stores sets each formed by one task command TCMD, one transaction identifier TID, one task data size ISZ and task data TDA defined by the transaction identifier TID and the task data size ISZ. Every time a task program is loaded by the array-type processor unit 52 or processing of the previous task by the array-type processor unit 52 is completed, the input FIFO 53 transmits the next set to be processed to the array-type processor unit 52. Thus, when a plurality of tasks are processed by the array-type processor unit 52, such tasks can be effectively and successively processed by the array-type processor unit 52 without stopping the operation thereof. On the other hand, while the array-type processor unit 52 loads a task program or intermediate data or carries out a task program, the input FIFO 53 can input the above-mentioned sets. Therefore, the processing efficiency of the stream processor 5 can be increased.

Every time the array-type processor unit 52 has received one task command TCMD from the input FIFO 53, the array-type processor unit 52 loads one task program TASK PRG via the DMA controller 57 from the memory 3, and then carries out the task program TASK PRG. As a result, the array-type processor unit 52 generates output data OUT as a result of processing the task data TDA and transmits the output data OUT via the output FIFO 54 to the memory access control circuit 55. In this case, the transaction identifier TID is associated with start data of the output data OUT.

The output FIFO 54 sequentially stores output data OUT associated with its transaction identifier TID. When the memory access control circuit 55 cannot transmit output data OUT to the bus 6 due to the access competition thereto or the like, the output FIFO 54 would not transmit the output data OUT to the memory access control circuit 55. On the other hand, after the access competition state to the memory 3 has disappeared, the output FIFO 54 would transmit the output data OUT associated with the transaction identifier TID to the memory access control circuit 55. Thus, the output data OUT of the array-type processor unit 52 can be sequentially stored in the output FIFO 54 without stopping the operation of the array-type processor unit 52. Therefore, the decrease of processing efficiency of the stream processor 5 would be suppressed.

When the memory access control circuit 55 receives the output data OUT associated with the transaction identifier TID, the memory access control circuit 55 accesses the description supervising table 56 to extract the return address RADR by referring to the transaction identifier TID. As a result, the memory access control circuit 55 stores the output data OUT transmitted from the output FIFO 54 in an area of the memory 3 starting at the return address RADR.

The DMA controller 57 is explained next in detail.

The DMA controller 57 is constructed by index registers 571 and 572, an arbitration circuit 573, a DMA command table 574, a DMA control unit 575, a data transmitter 576, a data receiver 577 and a bus interface 578.

The index register 571 receives an index IDX1 from the array-type processor unit 52 which is calculated in accordance with the task command TCMD using a task loading program LOAD PRG. In the simplest example, IDX1 = TCMD.

The index register 572 receives an index IDX2 via the bus interface 578 from the CPU 1. The index IDX2 is used for loading a task loading program LOAD PRG into the array-type processor unit 52.

Note that the task loading program LOAD PRG includes the following processings:
extracting a task command TCMD from the short descriptor DSC';
determining whether or not loading another task program TASK PRG is required in accordance with the extracted task command TCMD;
calculating an index IDX1 in accordance with the extracted task command TCMD;
transmitting the index IDX1 to the DMA controller 57; and
receiving a load completion signal CPL from the DMA controller 57.

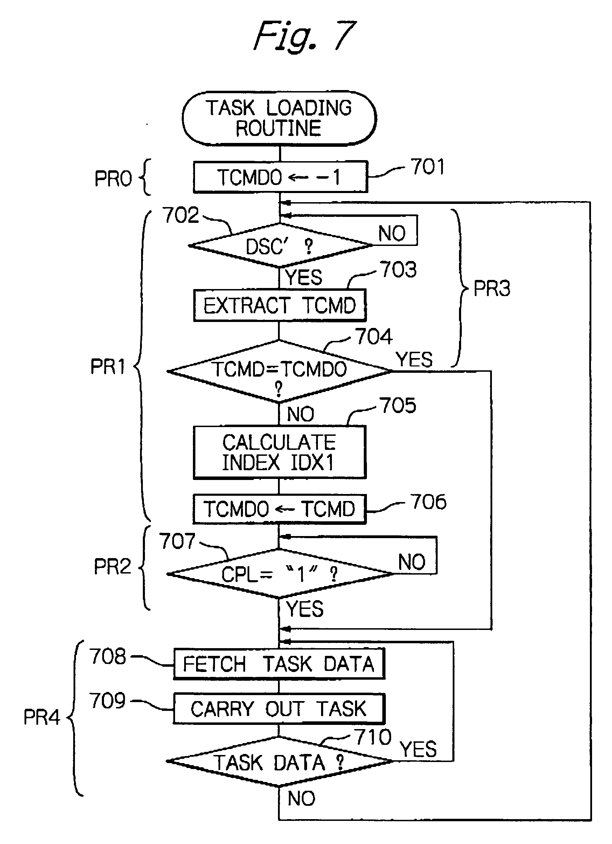

The task loading program LOAD PRG will be explained later in detail by referring to Fig. 7.

When the index registers 571 and 572 have received indexes IDX1 and IDX2, respectively, the index registers 571 and 572 generate index transfer request signals REQ1 and REQ2, respectively, and transmit them to the arbitration circuit 573 which, in turn, generates index transfer grant signals GNT1 and GNT2 and transmits them to the index registers 571 and 572, respectively. As a result, the indexes IDX1 and IDX2 are supplied as indexes IDX to the DMA command table 574. In this case, however, if the index transfer request signals REQ1 and REQ2 are generated simultaneously, the arbitration circuit 573 generates only one of the index transfer grant signals GNT1 and GNT2 in accordance with a prescribed manner so that collision between the indexes IDX1 and IDX2 can be avoided. For example, a priority is given to one of the transfer request signals REQ1 and REQ2, the arbitration circuit 573 transmits one of the transfer grant signals GNT1 and GNT2 having the priority to a respective one of the index registers 571 and 572, and then, transmits the other of the transfer request signals REQ1 and REQ2 to the other of the index registers 571 and 572.

The DMA control unit 575 carries out various processings such as processings for loading a task loading program LOAD PRG, a task program TASK PRG, intermediate data INTDA1, and processings for saving intermediate data INTDA2 in accordance with the content of the DMA control table 574.

The data transmitter 576 transmits a task loading program LOAD PRG, a task program TASK PRG and intermediate data INTDA1 from the bus interface 578 to the array-type processor unit 52 whose write (destination) address WRADR is designated by the DMA control unit 575. On the other hand, the data receiver 577 transmits intermediate data INTDA2 from the array-type processor unit 52 whose read (source) address RDADR is designated by the DMA control unit 575 to the bus interface 578.

The bus interface 578 transmits the task loading program LOAD PRG, the task program TASK PRG and the intermediate data INTDA1 from the memory 3 whose source address RDADR is designated by the DMA control unit 575 to the data transmitter 576. On the other hand, the bus interface 578 transmits the intermediate data INTDA2 from the data receiver 577 to the memory 3 whose destination address WRADR is designated by the DMA control unit 575.

Note that a renewed index IDK by the DMA control unit 575 is fed back to the DMA command table 574.

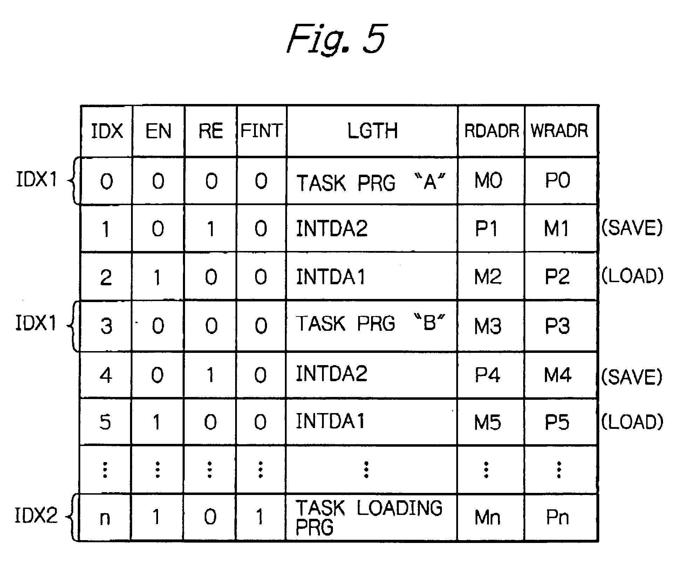

In Fig. 5, which shows an example of the content of the DMA command table 574, one DMA command designated by one index IDX is constructed by an end flag EN, a read enable flag RE, an interrupt flag FINT, a transfer data length LGTH, a read (source) address RDADR and a write (destination) address WRADR.

The end flag EN (="1") is used for showing that one task is completed, i.e., a switching of tasks is required. That is, when EN="1", one or more DMA commands designated by one or more indexes are completed to generate a load completion signal CPL from the DMA control unit 575 to the array-type processor unit 52.

The read enable flag RE (="0") is used for showing that the task command is adapted to load a task loading program LOAD PRG, a task program TASK PRG or intermediate data INTDA1 from the memory 3 to the array-type processor unit 52. On the other hand, the read enable flag (="1") is used for saving intermediate data INTDA2 from the array-type processor unit 52 to the memory 3. The intermediate data INTDA1 and INTDA2 are data of the registers (not shown) of the array-type processor unit 52.

Note that one task program is actually constructed by one or more programs.

The interrupt flag PINT (="1") is used for generating an interrupt signal INT when one task is completed. For example, when the CPU 1 generates an index IDX2, the CPU 1 can carry out the next processing immediately upon receipt of an interrupt signal INT generated after the task loading program LOAD PRG is loaded when the last task command of one task is completed.

The transfer data length LGTH is used for defining a data length of a task loading program LOAD PRG, a task program TASK PRG, intermediate data INTDA1, or intermediate data INTDA2. In Fig. 5, for example, TASK PRG "A" is a length of a task program "A", INTDA1 is a length of intermediate data INTDA1, INTDA2 is a length of intermediate data INTDA2, and LOAD RGM is a length of a task loading program LOAD PRG.

The read (source) address RDADR is a start address of an area of the memory 3 or the array-type processor unit 52 from which a task loading program LOAD PRG, a task program TASK PRG, intermediate data INTDA1, or intermediate data INTDA2 is read. On the other hand, the write (destination) address WRADR is a start address of an area of the memory 3 or the array-type processor unit 52 into which a task loading program LOAD PRG, a task program TASK PRG, intermediate data INTDA1, or intermediate data INTDA2 is written. Here, M0, M1, ··· designate addresses of the memory 3, while P0, P1, ··· designate addresses of the array-type processor unit 52.

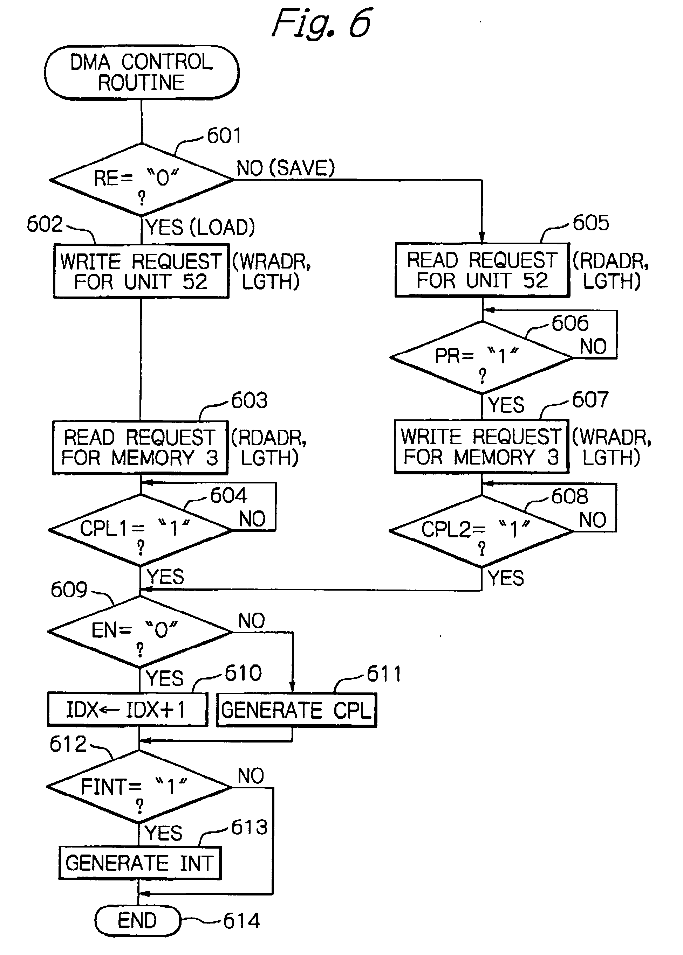

The operation of the DMA control unit 575 will be explained next with reference to a routine of Fig. 6. This routine is started by receiving one DMA command from the DMA command table 574 every time one index IDX is supplied thereto.

First, at step 601, it is determined whether the read enable flag RE of the DMA command is "0" or "1". As a result, when RE="0", the control proceeds to steps 602 through 604 which loads a task loading program LOAD PRG, a task program TASK PRG or intermediate data INTDA1 from the memory 3 to the array-type processor unit 52. On the other hand, when RE="1", the control proceeds to steps 605 through 608 which saves intermediate data INTDA2 from the array-type processor unit 52 to the memory 3.

At step 602, a write request using a write address WRADR and a transfer data length LGTH is performed upon the array-type processor unit 52. In this case, a task loading program LOAD PRG, a task program TASK PRG or intermediate data INTDA1 is written into the array-type processor unit 52.

At step 603, a read request using a read address RDADR and the transfer data length LGTH is performed upon the memory 3 via the bus interface 578. In this case, the task loading program LOAD PRG, the task program TASK PRG or the intermediate data INTDA1 is read from the memory 3 to the data transmitter 576 which, in turn, transmits the task loading program LOAD PRG, the task program TASK PRG or the intermediate data INTDA1 is written into the array-type processor unit 52. After the transmission by the data transmitter 576 is completed, the data transmitter 576 generates a transmission completion signal CPL1 (="1") and transmits it to the DMA control unit 575. Thus, after the DMA control unit 575 has received this transmission completion signal CPL1, the control proceeds via step 604 to step 609.

On the other hand, at step 605, a read request using a read address RDADR and a transfer data length LGTH is performed upon the array-type processor unit 52. In this case, intermediate data INTDA2 is read from the array-type processor unit 52 to the data receiver 577. As a result, the data receiver 577 generates a data transfer preparing signal PR (="1") and transmits it to the DMA control unit 575. Thus, after the DMA control unit 575 has received this data transfer preparing signal PR, the control proceeds via step 606 to step 607.

At step 607, a write request using the write address WRADR and the transfer data length LGTH is performed upon the memory 3 via the bus interface 578. In this case, the intermediate data INTDA2 is written from the data receiver 577 into the memory 3. After the transmission by the data receiver 577 is completed, the data receiver 577 generates a transmission completion signal CPL2 (="1") and transmits it to the DMA control unit 575. Thus, the control proceeds via step 608 to step 609.

At step 609, it is determined whether the end flag EN is "0" or "1". As a result, when EN="0", the control proceeds to step 610 which increments the index IDX by +1. Then, the incremented index IDX is supplied to the DMA command table 574. Thus, the control at steps 601 to 609 is for the incremented index IDX. On the other hand, when EN="1", the control proceeds to step 611 which generates a completion signal CPL and transmits it to the array-type processor unit 52, which would perform a task.

At step 612, it is determined whether the interrupt flag FINT is "1" or "0". Only when FINT="1", does the DMA control unit 575 generate an interrupt signal INT and transmit it directly to the CPU 1. As a result, the CPU 1 can carry out other processings immediately.

The routine of Fig. 6 is completed by step 614.

Thus, once one index IDX is supplied to the DMA command table 574, the routine of Fig. 6 is substantially repeated by the incrementation of the index IDX until a completion signal CPL is generated by step 611.

The operation of the array-type processor unit 52 of Fig. 3 will be explained next with reference to a task loading program LOAD PRG as shown in Fig. 7.

First, at step 701, a previous task command TCMDO is initialized at -1, for example.

Next, at step 702, it is determined whether there is a short descriptor DSC' in the input FIFO 53. Only when there is such a short descriptor DSC' in the input FIFO 53, does the control proceed to step 703 which extracts a task command TCMD from the short descriptor DSC'.

At step 704, it is determined whether the task command TCMD is the same as the previous task command TCMDO. As a result, when TCMD≠TCMDO, the control proceeds to steps 705 through 707. On the other hand, when TCMD=TCMDO, the control proceeds directly to step 708.

At step 705, an index IDX1 is calculated in accordance with the task command TCMD. For example, IDX1← TCMD. The index IDX1 is supplied via the index register 571 and the arbitration circuit 573 to the DMA command table 574. As a result, the DMA control unit 575 is operated in accordance with the routine of Fig. 6.

Next, at step 706, the previous task command TCMD0 is replaced by TCMD.

Next, at step 707, the array-type processor unit 52 awaits a completion signal CPL from the DMA control unit 575. Only when the array-type processor unit 52 has received such a completion signal CPL, does the control proceed to step 708. At step 708, the array-type processor unit 52 fetches task data TDA associated with the short descriptor DSC' from the input FIFO 53.

Next, at step 709, the array-type processor unit 52 carries out a task defined by the task command TCMD using the task program TASK PRG and the task data TDA.

Step 710 repeats the control at steps 708 and 709 until there is no task data for the task command TCMD.

Then, the control returns to step 702.

In Fig. 7, the control at step 701 is referred to as a process PR0, the control at steps 702 to 706 is referred to as a process PR1, the control at step 707 is referred to as a process PB2, the process at steps 702 to 704 is referred to as a process PR3, and the control at steps 708 to 710 is referred to as a process PR4.

Note that the operation of the routine of Fig. 7 can be realized by hardware such as a logic circuit.

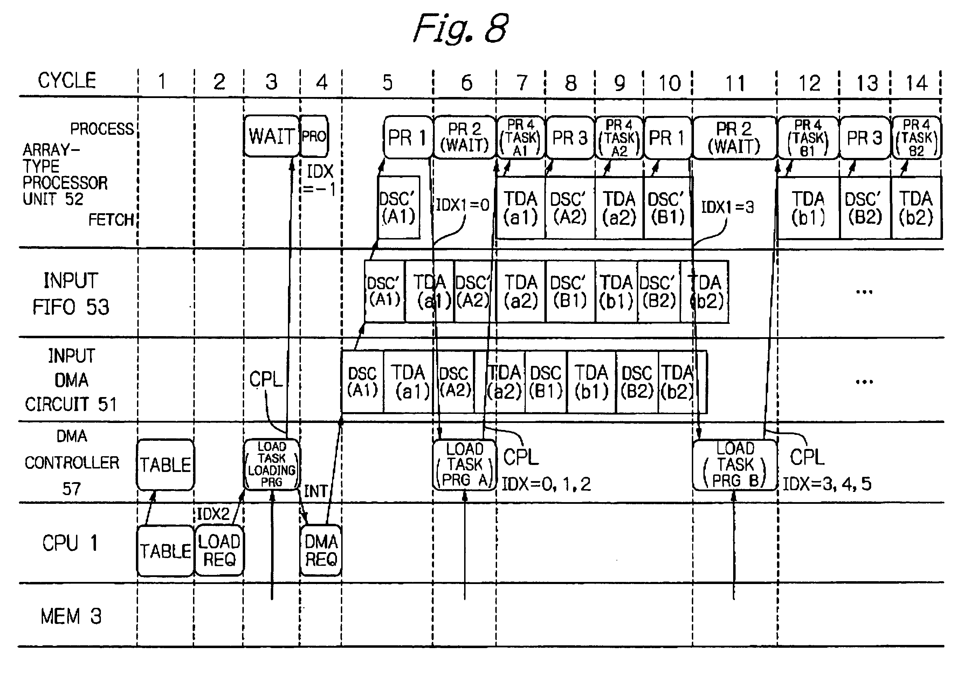

The multi-tasking operation of the data processing apparatus of Fig. 3 is explained next with reference to Fig. 8 as well as Figs. 5, 6 and 7.

In Fig. 8, assume that, the array-type processor unit 52 sequentially carries out a task A1 using a task program A and task data a1, a task A2 using the task program A and task data a2, a task B1 using a task program B and task data b1, a task B2 using the task program B and task data b2. Also, a task loading program LOAD PRG, the task programs A and B, the task data a1, a2, b1, b2 and required intermediate data are stored in the memory 3 in advance.

First, at cycle 1, the CPU 1 prepares DMA command data as shown in Fig. 5 and sets it in the DMA command table 574. After that, the DMA command data in the DMA command table 574 is never changed unless the power to the apparatus is turned OFF.

Next, at cycle 2, the CPU 1 generates an index IDX2 whose value is n and transmits it to the index register 572, to thereby request loading of the task loading program LOAD PRG of Fig. 7 into the array-type processor unit 52.

Next, at cycle 3, the DMA command table 574 generates a DMA command designated by the index n as shown in Fig. 5, and transmits it to the DMA control unit 575. As a result, the DMA control unit 575 loads the task loading program LOAD PRG from an area of the memory 3 whose start address is Mn into an area of the array-type processor unit 52 whose start address is Pn. After the task loading program LOAD PRG is loaded, the previous task command TCMDO is initialized at -1 (see: PR0 of Fig. 7). Also, the DMA control unit 575 generates a completion signal CPL and transmits it to the array-type processor unit 52 due to the end flag EN (="1") (see: step 611 of Fig. 6), and also, the DMA control unit 575 generates an interrupt signal INT and transmits it to the CPU 1 due to the interrupt flag FINT (="1") (see: step 613 of Fig. 6).

Next, at cycle 4, after the CPU 1 has received the interrupt signal INT from the DMA control unit 575, the CPU 1 sets "ADR0" in the descriptor pointer DP of the input DMA circuit 51 (see: Fig. 4A). That is, since one or more descriptors are stored in the memory 3 as shown in Fig. 4A, the CPU 1 sets the memory address ADR0 of the first descriptor of these descriptors. As a result, the input DMA circuit 51 starts a DMA operation by incrementing the descriptor pointer DP. Thus, a descriptor (DSC) A1 followed by task data (TDA) a1, a descriptor (DSC) A2 followed by task data (TDA) a2, a descriptor (DSC) B1 followed by task data (TDA) b1, and a descriptor (DSC) B2 followed by task data (TDA) b2 are sequentially input to the input DMA circuit 51. Note that the descriptor (DSC) A1, A2, B1 and B2 have the same formats as shown in Fig. 4A. Simultaneously, a short descriptor (DSC') A1 followed by the task data (TDA) a1, a short descriptor (DSC') A2 followed by the task data (TDA) a2, a short descriptor (DSC') B1 followed by the task data (TDA) b1, and a short descriptor (DSC') B2 followed by the task data (TDA) b2 are sequentially input to the input FIFO 53. Note that the short descriptor (DSC') A1, A2, B1 and B2 have the same formats as shown in Fig. 4B.

Next, at cycle 5, referring to the process PR1 of Fig. 7, the array-type processor unit 52 fetches the short descriptor (DSC') A1 from the input FIFO 53 to determine whether or not the task command TCMD thereof is the same as the previous task command TCMDO. In this case, since TCMD ≠ TCMD0, an index IDX1 is calculated in accordance with the task command TCMD (see: step 704 of Fig. 7), i.e., IDX1=0. The index IDX1(=0) is supplied via the index register 571 and the arbitration circuit 573 as an index IDX(=0) to the DMA command table 574.

Next, at cycle 6, after the DMA control unit 575 receives a task command designated by the index IDX1(=0) (see: Fig. 5), the task program A is loaded from an area of the memory 3 whose start address is M0 into an area of the array-type processor unit 52 whose start address is P0. Also, after this loading operation is completed, the index IDX is incremented by +1 (see: step 610 of Fig. 6), and the incremented index IDX(=1) is supplied to the DMA command table 574. As a result, intermediate data INTDA2 is saved from an area of the array-type processor unit 52 whose start address is P1 to an area of the memory 3 whose start address is M1 (see: Fig. 5). Further, after this saving operation is completed, the index IDX is again incremented by +1 (see: step 610 of Fig. 6), and the incremented index IDX(=2) is supplied to the DMA command table 574. As a result, intermediate data INTDA1 is loaded from an area of the memory 3 whose start address is M2 to an area of the array-type processor unit 52 whose start address is P2 (see: Fig. 5). After this loading operation is completed, the DMA control unit 575 of the DMA controller 57 generates a completion signal CPL and transmits it to the array-type processor unit 52 due to the end flag EN (="1") (see: step 611 of Fig. 6). On the other hand, the array-type processor unit 52 is in a waiting state by the process PR2 of Fig. 7 until the array-type processor unit 52 receives the completion signal CPL.

Next, at cycle 7, referring to the process PR4 of Fig. 7, after the array-type processor unit 52 has received the completion signal CPL from the DMA control unit 575 of the DMA controller 57, the array-type processor unit 52 fetches the task data (TDA) a1 and performs a task A1 upon the task data a1 using the task program A.

Next, at cycle 8, referring to the process PR3 of Fig. 7, the array-type processor unit 52 fetches the short descriptor (DSC') A2 from the input FIFO 53 to determine whether or not the task command TCMD thereof is the same as the previously fetched task command TCMD0. In this case, since TCMD=TCMD0, no index IDX1 is calculated by skipping steps 705 to 707 of Fig. 7.

Next, at cycle 9, referring to the process PR4 of Fig. 7, the array-type processor unit 52 immediately fetches the task data (TDA) a2 and performs a task A2 upon the task data a2 using the task program A.

Next, at cycle 10, referring to the process PR1 of Fig. 7, the array-type processor unit 52 fetches the short descriptor (DSC') B1 from the input FIFO 53 to determine whether or not the task command TCMD thereof is the same as the previous task command TCMDO. In this case, since TCMD ≠ TCMD0, an index IDX1 is calculated in accordance with the task command TCMD (see: step 704 of Fig. 7), i.e., IDX1=3. The index IDX1(=3) is supplied via the index register 571 and the arbitration circuit 573 as an index IDX(=3) to the DMA command table 574.

Next, at cycle 11, after the DMA control unit 575 receives a task command designated by the index IDX1(=4) (see: Fig. 5), the task program B is loaded from an area of the memory 3 whose start address is M3 to an area of the array-type processor unit 52 whose start address is P3. Also, after this loading operation is completed, the index IDX is incremented by +1 (see: step 610 of Fig. 6), and the incremented index IDX(=4) is supplied to the DMA command table 574. As a result, intermediate data INTDA2 is saved from an area of the array-type processor unit 52 whose start address is P4 to an area of the memory 3 whose start address is M4 (see: Fig. 5). Further, after this saving operation is completed, the index IDX is again incremented by +1 (see: step 610 of Fig. 6), and the incremented index IDX(=5) is supplied to the DMA command table 574. As a result, intermediate data INTDA1 is loaded from an area of the memory 3 whose start address is M2 into an area of the array-type processor unit 52 whose start address is P5 (see: Fig. 5). After this loading operation is completed, the DMA control unit 575 of the DMA controller 57 generates a completion signal CPL and transmits it to the array-type processor unit 52 due to the end flag EN (="1") (see: step 611 of Fig. 6). On the other hand, the array-type processor unit 52 is in a waiting state by the process PR2 of Fig. 7 until the array-type processor unit 52 receives the completion signal CPL.

Next, at cycle 12, referring to the process PR4 of Fig. 7, after the array-type processor unit 52 has received the completion signal CPL from the DMA control unit 575 of the DMA controller 57, the array-type processor unit 52 fetches the task data (TDA) b1 and performs a task B1 upon the task data b1 using the task program B.

Next, at cycle 13, referring to the process PR3 of Fig. 7, the array-type processor unit 52 fetches the short descriptor (DSC') B2 from the input FIFO 53 to determine whether or not the task command TCMD thereof is the same as the previously fetched task command TCMDO. In this case, since TCMD=TCMDO, no index IDX1 is calculated by skipping steps 705 to 707 of Fig. 7.

Finally, at cycle 14, referring to the process PR4 of Fig. 7, the array-type processor unit 52 immediately fetches the task data (TDA) b2 and performs a task B2 upon the task data b2 using the task program A.

Note that, at cycles 6 and 11, the index IDX is renewed by incrementing the index IDX; however, the index IDX is can be renewed by decrementing the index IDX if the table of Fig. 5 is changed. Also, after the task program "A" or "B" is loaded, one or both of the saving operation of intermediate data INTDA2 and the loading operation of intermediate data INTDA1 can be carried out as occasion demands.

Also, the array-type processor unit 52 can be replaced by another type processor unit which can perform a task upon task data in accordance with a task program.

Additionally, note that, although the entire data processing apparatus of Fig. 3 can be constructed by a single semiconductor integrated circuit device, each of the CPU 1, the memory 3, the input/output circuit 4 and the stream processor 5 can be constructed by one semiconductor integrated circuit device. Also, the input/output circuit 4 can be replaced by a plurality of input/output circuits. Further, the bus 6 can be constructed by a connection network such as a crossbar switch. Additionally, an interrupt signal INT from the DMA control unit 575 can be transmitted via an interrupt controller to the CPU 1.

As explained hereinabove, according to the present invention, since the CPU 1 only has to set DMA commands in the stream processor 5, tasks can be carried out without the control of the CPU 1 for the stream processor 5, the processing burden of the CPU 1 can be remarkably decreased. Also, even when the stream processor 5 loads one task program therein, a task switching never occurs in the CPU 1. Therefore, since the latency increase by the memory access of the CPU 1 is suppressed, the decrease in throughput can be suppressed.

## Claims

1. A stream processor comprising:
an input direct memory access circuit adapted to receive a task command (TCMD) and task data (TDA) in correspondence with a task from an external memory (3);
a processor unit (52), adapted to receive said task command and said task data from said input direct access memory circuit and perform said task upon said task data in accordance with a task program designated by said task command; and
a direct memory access controller (57), connected to said processor unit and adapted to load said task program from said external memory into said processor unit upon receipt of a task program load request from said processor unit.

2. The stream processor as set forth in claim 1, wherein said processor unit receives said task data after said task program is loaded therein.

3. The stream processor as set forth in claim 1, wherein when said task command is different from a task command of an immediately-before-performed task, said direct memory access controller performs upon receipt of said task program load request at least one of the steps of;
saving first intermediate data (INTDA2) from said processor unit to said external memory; and
loading second intermediate data (INTDA1) from said external memory into said processor unit.

4. The stream processor as set forth in claim 3, wherein said processor unit generates a first index (IDX1) in accordance with said task command,
said direct memory access controller comprising:
a first index register (571) adapted to receive said first index;
a direct memory access command table (574) adapted to store a relationship between indexes and direct memory access commands each including a source address (RDADR) and a destination address (WRADR) of one of said task program, said first intermediate data and said second intermediate data, said direct memory access command table generating said source address and said destination address of a respective one of said direct memory access commands by referring to said first index as one of said indexes when said direct memory access command table has received said first index; and
a direct memory access control unit (575) connected to said direct memory access command table and adapted to receive said source address and said destination address, to transmit one of said task program, said first and second intermediate data between an area of said processor unit whose start address is one of said source address and said destination address and an area of said external memory whose start address is the other of said source address and said destination address.

5. The stream processor as set forth in claim 4, wherein each of said direct memory access commands of said direct memory access command table further includes an end flag (EN) for showing a completion of execution,
said direct memory access control unit being adapted to perform the steps of:
determining whether or not an end flag generated from said direct memory access command table is a first value for showing a completion of execution or a second value for showing a continution of execution;
generating a completion signal (CPL) and transmitting said completion signal to said processor unit when the end flag shows said first value; and
renewing the index received from said direct memory access command table to generate a renewed index and feed said renewed index back to said direct memory access command table as one of said indexes when the end flag shows said value.

6. The stream processor as set forth in claim 4, wherein said direct memory access controller further comprises:
a second index register (572) adapted to receive a second index (IDX2) from the outside; and
an arbitration circuit (573), connected to said first and second index registers, so that said direct memory access command table refers to one of said first and second indexes as one of said indexes when said first index collides with said second index.

7. The stream processor as set forth in claim 4, wherein each of said direct memory access commands of said direct memory access command table further includes an interrupt flag (FINT),
said direct memory access control unit being adapted to perform the steps of:
determining whether or not an interrupt flag generated from said direct memory access command table is a third value for showing generation of interruption or a fourth value for showing a generation of no interruption; and
generating an interrupt signal (INT) and transmitting said interrupt signal to the outside when the interrupt flag shows said third value.

8. The stream processor as set forth in claim 1, wherein said input direct memory circuit receives a descriptor (DSC) including said task command, an input data address (IADR) of said external memory for said task data from said external memory, receives said task data using said input data address and said input data size from said external memory, and extracts said task command from said descriptor.

9. The stream processor as set forth in claim 8, further comprising a memory access control circuit (55) adapted to receive output data (OUT) from said processor unit and transmit the output data to said external memory.

10. The stream processor as set forth in claim 9, wherein said descriptor further includes an output data address (RADR) of said external memory, and
said memory access control circuit writes the output data into an area of said external memory by referring to said output data address.

11. The stream processor as set forth in claim 9, wherein said descriptor further includes a descriptor identifier (TID) for identifying said descriptor from other descriptors,
said stream processor further comprising a descriptor supervision table (56) for storing a relationship between said descriptor identifier and said output data address, and
said memory access control circuit writes the output data into an area of said external memory using said output data address by referring to said transaction identifier associated with said output data.

12. The stream processor as set forth in claim 1, further comprising an input first-in first-out (53) between said input direct memory access circuit and said processor unit.

13. The stream processor as set forth in claim 9, further comprising an output first-in first-out (54) between said processor unit and said memory access control circuit.

14. The stream processor as set forth in claim 1, wherein said processor unit comprises an array-type processor units formed by a plurality of processor elements arranged in an array.

15. The stream processor as set forth in claim 1, wherein said task command designates one or more task programs.
